(19) Europäisches Patentamt / European Patent Office / Office européen des brevets

(11) **EP 4 030 278 B1**

(12) **EUROPEAN PATENT SPECIFICATION**

(45) Date of publication and mention
of the grant of the patent:
**26.03.2025 Bulletin 2025/13**

(21) Application number: **21204973.8**

(22) Date of filing: **27.10.2021**

(51) International Patent Classification (IPC):
**G06N 5/01** *(2023.01)*    **G06N 7/01** *(2023.01)*
**G06Q 10/04** *(2023.01)*    **G06F 7/544** *(2006.01)*
**G06F 30/20** *(2020.01)*    **G06F 17/11** *(2006.01)*

(52) Cooperative Patent Classification (CPC):
**G06F 7/5443; G06F 17/11; G06N 5/01; G06N 7/01;
G06Q 10/04**

(54) **OPTIMIZATION INFORMATION PROCESSING APPARATUS, METHOD, AND PROGRAM**

OPTIMIZATION INFORMATIONSVERARBEITUNGSVORRICHTUNG, -VERFAHREN UND -PROGRAMM

APPAREIL, PROCÉDÉ ET PROGRAMME D'OPTIMIZATION DE TRAITEMENT D'INFORMATIONS

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **15.01.2021 JP 2021005349**

(43) Date of publication of application:
**20.07.2022 Bulletin 2022/29**

(73) Proprietor: **FUJITSU LIMITED**
**Kawasaki-shi, Kanagawa 211-8588 (JP)**

(72) Inventors:
• **Konoshima, Makiko**
**Kawasaki-shi, Kanagawa, 211-8588 (JP)**
• **Tamura, Hirotaka**
**Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(56) References cited:
• **CICHOCKI A ET AL: "Tensor Networks for Dimensionality Reduction and Large-Scale Optimizations. Part 2 Applications and Future Perspectives", ARXIV.ORG, CORNELL UNIVERSITY LIBRARY, 201 OLIN LIBRARY CORNELL UNIVERSITY ITHACA, NY 14853, 30 August 2017 (2017-08-30), XP080955220, DOI: 10.1561/2200000067**
• **CICHOCKI ANDRZEJ ET AL: "Tensor Networks for Dimensionality Reduction and Large-scale Optimization: Part 1 Low-Rank Tensor Decompositions", FOUNDATIONS AND TRENDS IN MACHINE LEARNING, vol. 9, no. 4-5, 1 January 2017 (2017-01-01), pages 249 - 429, XP055909859, ISSN: 1935-8237, Retrieved from the Internet <URL:https://www.commsp.ee.ic.ac.uk/~mandic/Tensor_Networks_Cichocki-Mandic_FTML_Part_1_Vol9_2016.pdf> DOI: 10.1561/2200000059**
• **JI YUWANG ET AL: "A Survey on Tensor Techniques and Applications in Machine Learning", IEEE ACCESS, vol. 7, 19 November 2019 (2019-11-19), pages 162950 - 162990, XP011757819, DOI: 10.1109/ACCESS.2019.2949814**

EP 4 030 278 B1

**Description**

FIELD

The embodiment discussed herein is related to an information processing apparatus, an information processing method, and an information processing program.

BACKGROUND

An optimization process is a field of information processing and an important field. Optimization problems are roughly classified into a linear programming problem and a discrete optimization problem. When the scale of the latter increases, the number of combinations in the problem explosively increases, and the calculation time does not fall within a realistic range with a technique of obtaining by calculating all the combinations in a brute-force manner.

There is an Ising apparatus (also referred to as, for example, a Boltzmann machine) that performs simulated annealing using an Ising-type energy function as a method of solving such a large-scale discrete optimization problem. For the Ising apparatus, there is a calculation technique in which a problem to be calculated is replaced with an Ising model that is a model representing the behavior of a spin of a magnetic body and represented by a quadratic.

Japanese Laid-open Patent Publication No. 2019-185602, U.S. Patent Application Publication No. 2019/0318258, and Japanese Laid-open Patent Publication No. 2018-206016 are disclosed as related art. CICHOCKI A ET AL: "Tensor Networks for Dimensionality Reduction and Large-Scale Optimizations. Part 2 Applications and Future Perspectives", CORNELL UNIVERSITY LIBRARY, 201 OLIN LIBRARY CORNELL UNIVERSITY ITHACA, NY 14853, 30 August 2017 relates to tensor networks and their operations and focuses on tensor network models for super-compressed higher-order representation of data /parameters and related cost functions, while providing an outline of their applications in machine learning and data analytics.

CICHOCKI ANDRZEJ ET AL: "Tensor Networks for Dimensionality Reduction and Large-scale Optimization: Part 1 Low-Rank Tensor Decompositions", FOUNDATIONS AND TRENDS IN MACHINE LEARNING, vol. 9, no. 4-5, 1 January 2017, pages 249-429 describe solutions to low-rank tensor network decompositions and easy to interpret graphical representations of the mathematical operations on tensor networks.

JI YUWANG ET AL: "A Survey on Tensor Techniques and Applications in Machine Learning", IEEE ACCESS, 19-11-2019 vol. 7, pages 1 62950-162990 give a comprehensive overview of tensor techniques and applications in machine learning.

SUMMARY

[TECHNICAL PROBLEM]

In the Ising model, a plurality of variables are respectively regarded as a plurality of spins of a magnetic body, and the simulated annealing is performed by using values of a coupling coefficient that represent the strength of mutual coupling of the plurality of spins. When the number of variables included in the energy function represented by the Ising model increases, the number of coupling variables also increases. Thus, for example, when solving a problem in which the number of bits of x is very large in the Ising model or the like in a problem of obtaining x with which an energy function E (x) is minimized, allocating a matrix that includes all of the values of the coupling coefficient of the Ising model in a memory of an apparatus or software may make the size of data to be allocated in the memory become tens of gigabytes, or in some cases, hundreds of gigabytes or larger.

Accordingly, the following problems arise: preparation of a large memory becomes difficult depending on a platform that performs processing; and overhead for allocation to the memory increases.

In one aspect, an object is to provide an information processing apparatus, a method of processing information, and an information processing program that may suppress the size of data to be allocated in a memory when a discrete optimization problem is solved.

[SOLUTION TO PROBLEM]

According to an aspect of the embodiments, an information processing apparatus includes a control unit that decomposes a first matrix of a coupling coefficient which represents interaction between a plurality of variables into a plurality of matrices by using a plurality of rank numbers, for each of the plurality of rank numbers, obtains, from the plurality of matrices, a second element that corresponds to a first element of the coupling coefficient, restores the first element based on the second element, restores a second matrix based on the plurality of matrices, acquires a squared error between the second matrix and the first matrix, determines a first rank number which is an allowable error from the plurality of rank numbers based on the error, and obtains the second element from the plurality of matrices decomposed by using the first rank number.

[ADVANTAGIOUS EFFECTS OF INVENTION]

In the one aspect, the size of the data to be allocated in the memory when a discrete optimization problem is solved may be suppressed.

BRIEF DESCRIPTION OF DRAWINGS

FIG. 1 illustrates an example of a functional block diagram of an information processing apparatus according to one embodiment;
FIG. 2 illustrates a system configuration example according to the one embodiment;
FIG. 3 illustrates an example of a functional block diagram of the information processing apparatus according to an embodiment;
FIG. 4 explains matrix decomposition;
FIG. 5 illustrates a system configuration example according to the present embodiment;
FIG. 6 is a flowchart illustrating a flow of the entirety of a minimum solution searching process according to the present embodiment;
FIG. 7 illustrates an example of a matrix of the distance between cities;
FIG. 8 illustrates an example of a bit allocation for cities to visit;
FIG. 9 is a flowchart illustrating a flow of a matrix decomposition and restoration process according to the present embodiment;
FIG. 10 is a flowchart illustrating a flow of the minimum solution searching process according to the present embodiment;
FIG. 11 illustrates examples of results of the minimum solution searching process according to the present embodiment;
FIG. 12 illustrates an example of the difference in memory allocation amount depending on whether compression is performed according to the present embodiment; and
FIG. 13 explains a hardware configuration example.

DESCRIPTION OF EMBODIMENTS

Hereinafter, examples of an information processing apparatus, a method of processing information, and an information processing program according to an embodiment will be described in detail with reference to the drawings. The examples do not limit the present embodiment. The examples may be combined with each other as appropriate to the degree with which no inconsistency is caused. The disclosure herein is not limited to the case where an optimization problem is solved by using an Ising model. The disclosure herein may also be applied to the case where an optimization problem is solved by using a model including third-degree or higher-degree terms.

First, an example of a minimum solution searching process is described. In a problem of obtaining a vector $x \in \{0, 1\}^N$ or $x \in \{1, 1\}^N$ that minimizes an energy function E(x), for example, in the case of an Ising model (second degree), the energy function E(x) is calculated by the following expression (1).

$$E(x) = \sum_{i,j=1}^{N} W_{i,j} x_i x_j + \sum_{i=1}^{N} b_i x_i + C \qquad \cdots (1)$$

In expression (1), W is a matrix. To calculate E(x), $N^2$ elements are allocated as they are in memory for calculation. For this reason, for example, when N = 100000 and W is a real number (4 bytes), 40 gigabytes are demanded. Since b is one-dimensional and C is scalar, it is not demanded to consider the problem of a memory allocation amount.

In the case of, for example, the third degree instead of the second degree, the energy function E(x) is calculated by expression (2) below.

$$E(x) = \sum_{i,j,k=1}^{N} Z_{i,j,k} x_i x_j x_k + \sum_{i,j=1}^{N} W_{i,j} x_i x_j + \sum_{i=1}^{N} b_i x_i + C \qquad \cdots (2)$$

In the case of expression (2), Z is a third-degree array, and, for example, even when N = 10000, 400 gigabytes are demanded.

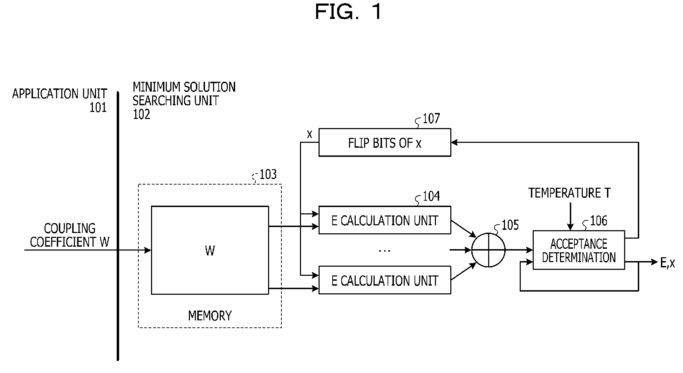

FIG. 1 illustrates an example of a functional block diagram of the information processing apparatus according to one embodiment. As illustrated in FIG. 1, a coupling coefficient W designated by an application unit 101 is transferred as it is to a memory 103 of a minimum solution searching unit 102.

An energy calculation unit 104 may include a plurality of calculation units so as to be parallelized by partially using W. As an example, an energy calculation unit 104 calculates $W_{i0j0} x_{i0} x_{j0}$ for (i0, j0) which is a certain set of i and j in expression (1). A process in which a plurality of sets of i and j are calculated and added together may be performed.

Next, calculation results by the calculation units of the energy calculation unit 104 are added together by a unit 105 to complete the process of expression (1). In the case where a unit 106 performs determination based on the Metropolis criterion, acceptance determination is performed also by referring to a temperature T, flipping is performed on several bits from 1 by using x of the determination result, and the process is performed again in the energy calculation unit 104. The flipping changes a value from 1 to 0 or 0 to 1 in the case of $x \in \{0, 1\}^N$, and from 1 to -1 or -1 to 1 in the case of $x \varepsilon \{1, -1\}^N$.

The processing performed by the energy calculation unit 104 to a unit 107 ends when a predetermined number of times is reached or a desired energy E is obtained. The calculation of energy E may be calculation of the difference in energy. In this case, the configuration is substantially unchanged from the configuration illustrated in FIG. 1. In the case of the calculation of the energy difference, the unit 107 outputs a bit difference $\Delta x$ obtained when the bit flip is performed, the energy calculation unit 104 calculate energy differences, the unit 105 adds the energy differences together, and the unit 106 performs the acceptance determination.

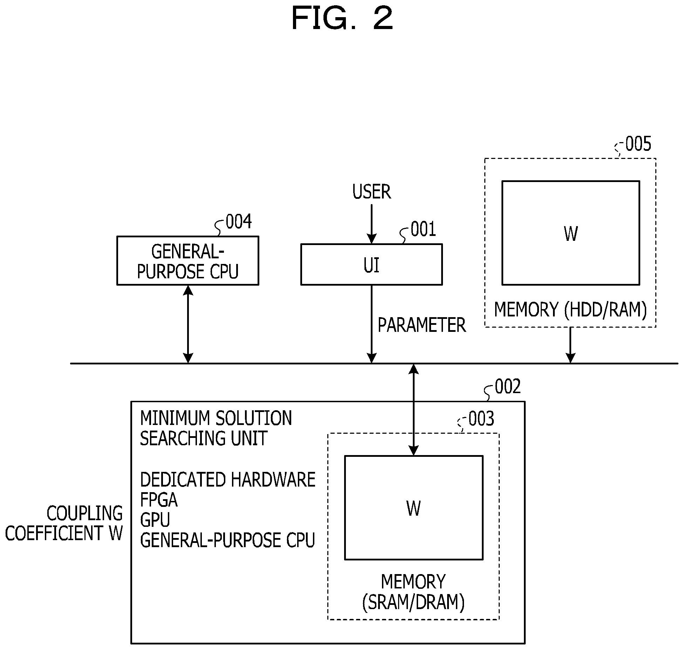

FIG. 2 illustrates a system configuration example according to the one embodiment. Parameters given from the outside such as a coupling coefficient W and a temperature are input by a user through the user interface (UI) 001. The coupling coefficient W input through the UI 001 is stored in a memory 005, which is, for example, a hard disk drive (HDD) or a random-access memory (RAM). The coupling coefficient W stored in the memory 005 is input to a memory 003.

The minimum solution searching unit 002 corresponds to the minimum solution searching unit 102 that is illustrated in FIG. 1 and includes the energy calculation unit 104 to the unit 107. The memory 003 corresponds to the memory 103 illustrated in FIG. 1 and is a static RAM (SRAM) or a dynamic RAM (DRAM) serving as a memory for a dedicated hardware device, a field-programmable gate array (FPGA), a graphics processing unit (GPU), and a general-purpose central processing unit (CPU) of the minimum solution searching unit 002. The general-purpose CPU 004 is a general-purpose CPU that handles applications and the like for processes for the UI 001 and the minimum solution searching unit 002.

Next, the present embodiment is described. According to the present embodiment, the coupling coefficient is compressed by a method that does not use complex calculation for decompression. Here, the complex calculation refers to, for example, the method according to the disclosure described in Japanese Laid-open Patent Publication No. 2018-206016. According to this method, the difference from a temporally and spatially neighboring numerical value is taken, and compression is performed with reference to a table. In order to decompress the compressed data, the table is referred to obtain the difference value, and further, the neighboring numerical value is referred to restore the original value. However, according to this method, it is demanded that a table is separately prepared and referred to one by one to generate variable length data having different numbers of bits and restore the original data from the variable length data. In addition, the decompressed neighboring numerical value is referred to. Thus, this method is unsuitable for parallel processing.

In contrast, according to the present embodiment, the positions of the elements of a matrix U and a matrix V corresponding to the elements of the coupling coefficient W desired to be restored are uniquely determined without referring to surroundings, and W is obtainable only by the product-sum operation. Thus, it may be said that parallel processing is possible and the calculation is simple.

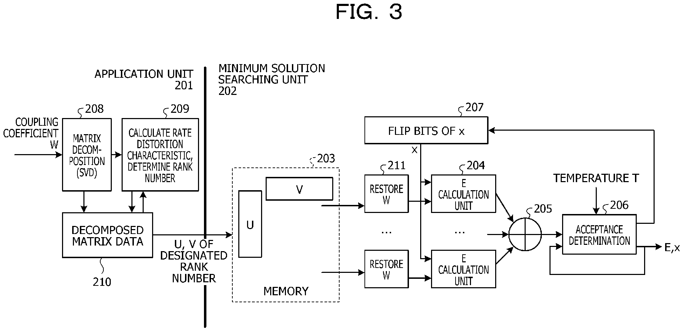

FIG. 3 illustrates an example of a functional block diagram of an information processing apparatus 10 according to the present embodiment. As illustrated in FIG. 3, for example, low-rank approximation of a singular value decomposition (SVD) is used to compress the coupling coefficient W. The SVD is used to decompose the coupling coefficient W into three matrices represented as W = U*S*V. The matrix U is N × k, the matrix S is k × k, and the matrix V is k × N. Low-rank approximation may be performed by decreasing the magnitude of a rank number k. The matrix S is a diagonal matrix representing a singular value and is multiplied by the matrix U or the matrix V to obtain two matrices.

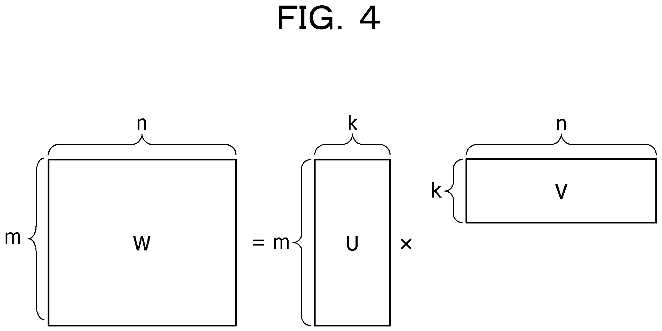

FIG. 4 explains matrix decomposition. As illustrated in FIG. 4, a matrix W of n × m is decomposed into a coefficient matrix U of k × m and a basis matrix V of n × k by using the rank number k. The rank number k is a number designated in advance by the user.

The matrix decomposition technique is not limited to the SVD and may be, for example, nonnegative matrix factorization in which a matrix after decomposition is limited to nonnegative values or 01 matrix factorization in which a matrix after decomposition is limited to be binary. The selection of the matrix decomposition technique depends on how the coupling coefficient W of the problem to be solved is desired to be handled.

Referring back to the description of FIG. 3, the coupling coefficient W is subjected to matrix decomposition in a matrix decomposition unit 208. The matrix decomposition is performed by using a plurality of designated rank numbers k, and the results are accumulated in a unit 210.

A unit 209 calculates, as a rate distortion characteristic, the relationship between an error compared to W and the rank number k when the matrices U and V, or U, V, and S resulting from the matrix decomposition are recomposed. For example, when the matrix recomposed by using the matrices U and V having been restored after the decomposition into the matrices U and V is W' = UV, an error may be generated between the coupling coefficient W and W'. Here, a difference D between the coupling coefficient W and W' is referred to as distortion, and the difference D is able to be calculated by the following expression: $D = \Sigma_{ij}(W_{ij} - W'_{ij})^2$.

As the magnitude of the rank number k decreases, the numbers of elements of the matrices U and V decrease and the magnitude of the difference D increases. Accordingly, the minimum rank number k for the allowable difference D and the matrices U and V, or U, V, and S obtained with this k are selected by changing the rank number k and checking the difference D with some values. In the example illustrated in FIG. 3, it is assumed that the matrices U and V have been selected.

The selected matrices U and V are accumulated in a memory 203, only the elements of the matrices U and V corresponding to the elements of the coupling coefficient W to be used for calculation in an energy calculation unit 204 are obtained from the memory 203 by a coupling coefficient W restoration unit 211, and the elements of the coupling coefficient W are restored. Depending on properties of the coupling coefficient W or the problem, positions that become diagonal components of the coupling coefficient W may be 0 and only a region that becomes an upper triangular matrix or a lower triangular matrix may be referred to and treated as a symmetric matrix.

The energy calculation unit 204 calculates the energy or the energy difference by using the elements of the coupling coefficient W restored by the coupling coefficient W restoration unit 211. Even when the coupling coefficient W is of the third or higher degree, processes may be performed with a configuration similar to the configuration illustrated in FIG. 3 by using tensor decomposition such as Tucker decomposition.

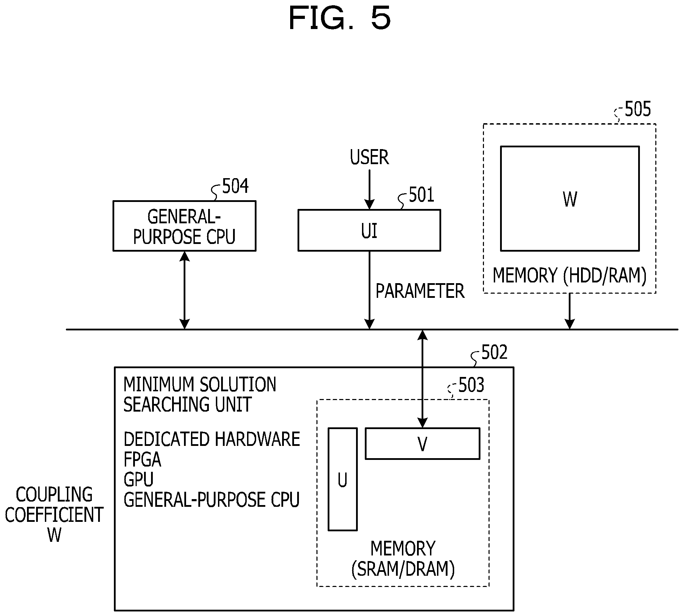

FIG. 5 illustrates a system configuration example according to the present embodiment. Parameters given from the outside such as a coupling coefficient W and a temperature are input by the user through a UI 501. The coupling coefficient W input through the UI 501 is stored in a memory 505, which is, for example, an HDD or a RAM.

The coupling coefficient W stored in the memory 505 is compressed by a general-purpose CPU 504 to calculate the matrices U and V, and the matrices U and V are stored in a memory 503. The general-purpose CPU 504 is a general-purpose CPU that handles applications and the like for processes for the UI 501 and a minimum solution searching unit 502. In addition, the general-purpose CPU 504 performs processes for the matrix decomposition unit 208 and the units 209 and 210 illustrated in FIG. 3.

The minimum solution searching unit 502 corresponds to the minimum solution searching unit 202 that is illustrated in FIG. 3 and includes the energy calculation unit 204 to the unit 207. The memory 503 corresponds to the memory 203 illustrated in FIG. 3 and is an SRAM or a DRAM serving as a memory for a dedicated hardware device, an FPGA, a GPU, and a general-purpose CPU of the minimum solution searching unit 502.

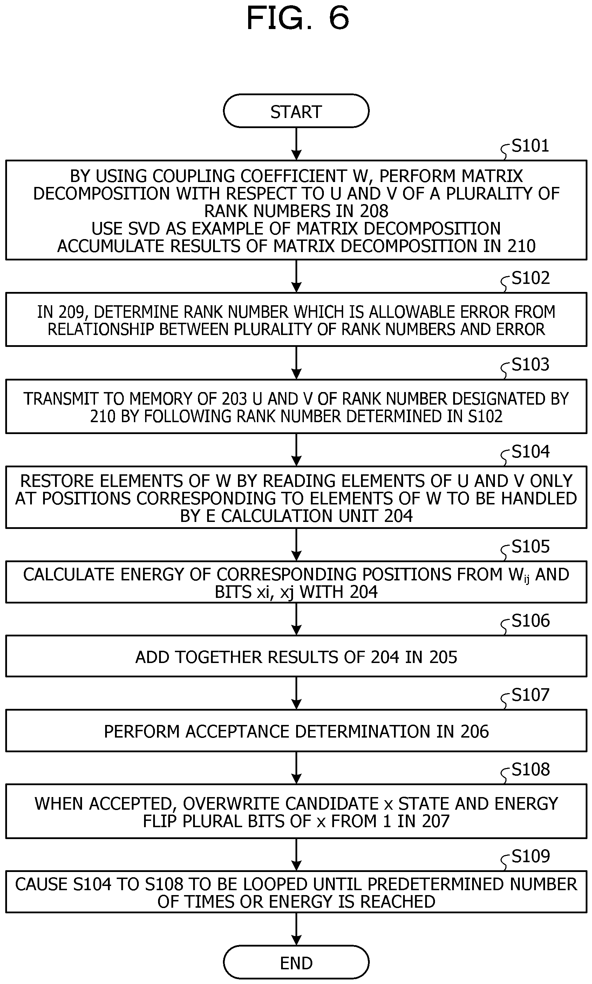

Next, with reference to a flowchart illustrated in FIG. 6, the minimum solution searching process to be executed by the information processing apparatus 10 according to the present embodiment is described along a flow. FIG. 6 is a flowchart illustrating a flow of the entirety of the minimum solution searching process according to the present embodiment.

As illustrated in FIG. 6, the information processing apparatus 10 performs, by using the coupling coefficient W, matrix decomposition with respect to the matrices U and V obtained with a plurality of rank numbers k in the matrix decomposition unit 208. Although the SVD is used as an example of the matrix decomposition, 01 matrix factorization or the like may be used according to the conditions of W. The results of the matrix decomposition are accumulated in the unit 210 (step S101).

Next, the information processing apparatus 10 checks and determines the rank number k for an allowable error from the relationships between the plurality of rank numbers k and the error D in the unit 209 (step S102).

Next, the information processing apparatus 10 transfers to the memory 203 the matrices U and V for which the rank number k has been obtained in step S102 (step S103).

Next, the information processing apparatus 10 restores the elements of the coupling coefficient W by reading the elements of the matrices U and V only at positions corresponding to the elements of the coupling coefficient W to be handled by the energy calculation unit 204 (step S104).

Next, the information processing apparatus 10 calculates the energy of the corresponding positions from $W_{ij}$ and the bits $x_i$, $x_j$ in the energy calculation unit 204 (step S105).

Next, the information processing apparatus 10 obtains the entire energy by adding together the results of step S105 in the unit 205 (step S106).

Next, the information processing apparatus 10 performs the acceptance determination based on the Metropolis criterion or the like in the unit 206 (step S107).

Next, when accepted in step S107, the information processing apparatus 10 overwrites a candidate x state and the energy to reflect the acceptance determination result in step S107 and flips the bits of x for the next processing (step S108).

Next, the information processing apparatus 10 causes steps S104 to S108 to be looped until a predetermined number of times or energy is reached (step S109).

Next, by using, a traveling salesman problem, the minimum solution searching process to be executed by the information processing apparatus 10 according to the present embodiment is more specifically described. The traveling salesman problem includes cities and visiting routes. For example, when the number of cities is represented as c, the number of bits is cities $\times$ routes or $c^2$.

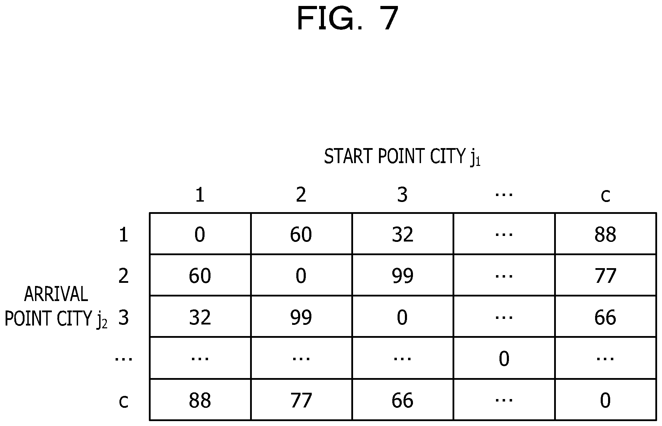

FIG. 7 illustrates an example of a matrix of the distance between cities. In the traveling salesman problem, the coupling coefficient W is a matrix representing the distance between cities in which the rows and the columns are cities. This matrix is a symmetric matrix having the diagonal components of 0 because the diagonal components are the distance between the same cities. In FIG. 7, the unit of numerical values representing the distance between cities such as "60" may be represented not only by the distance such as "cm (centimeters)" but also by a time period such as "minutes".

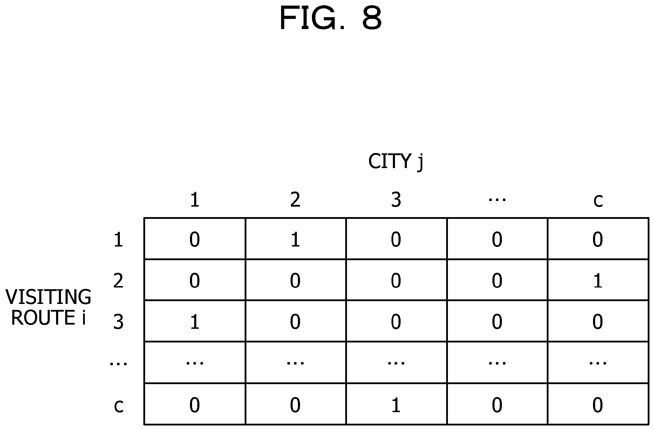

FIG. 8 illustrates an example of a bit allocation for cities to visit. For example, when the city to visit first is a city 2, as illustrated in FIG. 8, a bit of 1 is set for the city to visit in the row of the visiting route, and 0 is set for all the other cities. For example, only one of the bits is set to 1 in each of the rows and each of the columns. In such a traveling salesman problem, the energy function is represented by expression (3) below.

$$E(x) = \sum_{j_1,j_2,i=1}^{C} W_{j_1,j_2,} x_{i,j_1} x_{(x+1),j_2} + \lambda_1 \sum_{b=1}^{C} \left( \sum_{a=1}^{C} x_{a,b} - 1 \right)^2$$

$$+ \lambda_2 \sum_{a=1}^{C} \left( \sum_{b=1}^{C} x_{a,b} - 1 \right)^2 \qquad \cdots (3)$$

In expression (3), the first term on the right side is a total distance based on x, where the visiting route i = c + 1 is set as i = 1 (set as a closed path). The second and third terms on the right side represent constraints on the rows and the columns, and $\lambda$ represents the magnitudes of the constraints. To represent the traveling salesman problem by using the Ising model, it is sufficient that x in expression (1) be expanded into a vector, and the coupling coefficient W be expanded as the x is expanded. However, description will be made by using expression (3) here. The constraints in and after the second term on the right side of expression (3) will be omitted in the following description. Here, the flowchart of the minimum solution searching process illustrated in FIG. 6 will be more specifically described based on the first term on the right side of (3).

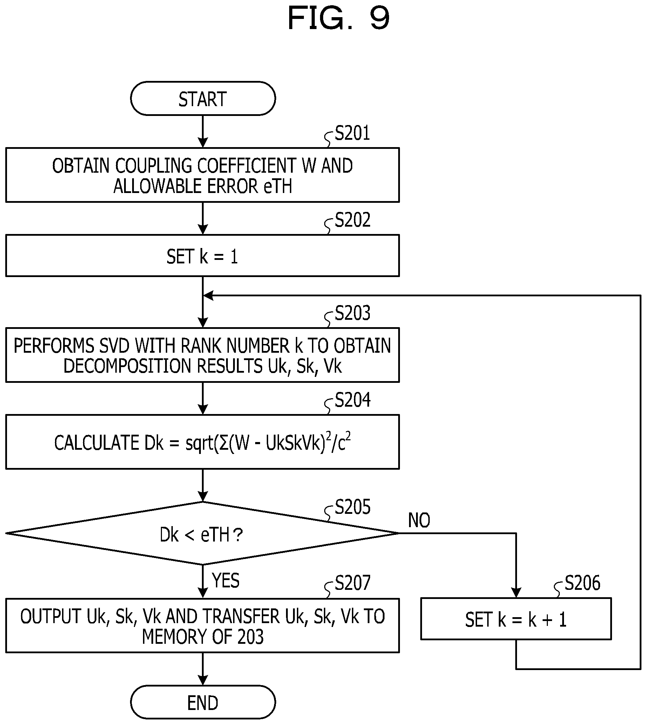

First, steps S101 to S103 in the flowchart illustrated in FIG. 6 are described with reference to a flowchart illustrated in FIG. 9. FIG. 9 is a flowchart illustrating a flow of a matrix decomposition and restoration process according to the present embodiment.

As illustrated in FIG. 9, the information processing apparatus 10 first obtains the coupling coefficient W and an allowable error eTH from the memory 505 (step S201). The allowable error eTH is designated by, for example, the user through the UI. Since the coupling coefficient W is a distance matrix, the allowable error eTH is an allowable value of deviation of the distance between cities. One of examples of allowable error eTH, the allowable error eTH is 100 when the numerical values of the elements of the coupling coefficient W is allowed to deviate by up to 100 cm in cm.

Next, the information processing apparatus 10 sets, for example, an initial value of a rank number k to 1 (step S202). Thereafter, the processing is repeated while incrementing the rank number k until the difference D between the coupling coefficient W and the restored matrix W' reaches the predetermined allowable error eTH. For example, the minimum rank number k within the allowable error eTH is searched.

Next, the information processing apparatus 10 performs the SVD with the rank number k to obtain matrices Uk, Sk, and Vk as the results of the decomposition (step S203).

Next, the information processing apparatus 10 calculates a squared error Dk = sqrt($\Sigma$(W - UkSkVk)$^2$)/$c^2$ indicating the difference between the coupling coefficient W and the restored matrix W' to calculate Dk (step S204).

Next, the information processing apparatus 10 determines whether the squared error Dk calculated in step S204 is smaller than the allowable error eTH (step S205). When it is determined that the squared error Dk is not smaller than the allowable error eTH (step S205: No), the information processing apparatus 10 increments the rank number k (step S206) and repeats the processing from step S203.

In contrast, when it is determined that the squared error Dk is smaller than the allowable error eTH (step S205: Yes), the information processing apparatus 10 outputs Uk, Sk (diagonal components), and Vk and transfers them to the memory 503 (step S207). After the execution of step S207, the matrix decomposition and restoration process illustrated in FIG. 9 ends.

The matrix decomposition and restoration process illustrated in FIG. 9 may be executed with modification as follows.

For example, in step S203, instead of the SVD, nonnegative matrix factorization or 0/1 matrix decomposition in which element values undergo dyadic expansion is performed. In step S204, an absolute value error is used instead of the squared error.

Although the initial value of the rank number k is set to 1 in step S202, the processing is started with k = c/2 as the initial value and repeated with k is set so that k = k - 1 in step S206. In this case, in step S205, it is determined whether the squared error Dk is larger than the allowable error eTH (whether Dk > eTH is true).

In step S205, the rank number k is set to k = 1 to c/2 with which the compression ratio is lower than 1 or in a range with which the compression ratio is a predetermined compression ratio. When, in step S205, a certain rank number k is detected near a point where a decrease in the magnitude of the error stops, the repetitive processing ends and the processing proceeds to step S207. Such detection of the rank number k is performed by using, for example, an expression $D_{k-1} - D_k > D_k - D_{k+1} + \varepsilon$, where a constant $\varepsilon$ is an error in a floating-point number.

In step S206, when, in addition to Uk, Sk, and Vk, error values of the upper or lower triangular matrix other than the diagonal components are output for an error g = W - UkSkVk, a certain number of error values counted from the largest error are output in sets of an element position and an error value (for example, as [row number, column number, error value] or the like). In step S206, Sk and Uk or Vk are multiplied to output two matrices.

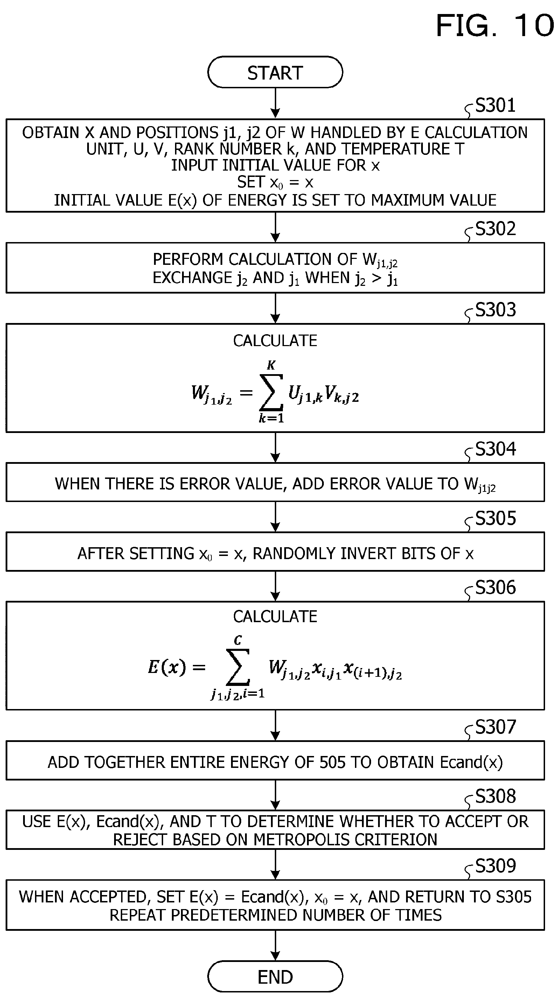

Next, remaining steps S104 to S109 in the flowchart illustrated in FIG. 6 are described with reference to a flowchart illustrated in FIG. 10. FIG. 10 is a flowchart illustrating a flow of the minimum solution searching process according to the present embodiment. The minimum solution searching process illustrated in FIG. 10 is described on the assumption that the matrix decomposition and restoration process illustrated in FIG. 9 has been executed by using the traveling salesman problem as an example, and the coupling coefficient W has been decomposed into two matrices U and V. In the minimum solution searching process illustrated in FIG. 10, the unit of the energy calculation unit 204 is the $j_1, j_2$ unit in expression (3).

As illustrated in FIG. 10, first, the information processing apparatus 10 obtains initial values for x and positions $j_1$, $j_2$, of the coupling coefficient W handled by the energy calculation unit 204, U, V, the rank number k, and a temperature Tx (step S301). Here, x is set to $x_0 = x$ by randomly inputting the initial value. An initial value E(x) of the energy is set to a maximum value.

Next, the information processing apparatus 10 performs calculation of $W_{j1,j2}$ (step S302). Here, on the assumption that the coupling coefficient W is a symmetric matrix, the values of the elements of the coupling coefficient W are 0 for $j_1 = j_2$, and only the upper triangular portion of the matrix is used, $j_2$ and $j_1$ are exchanged when $j_2 > j_1$.

Next, the information processing apparatus 10 calculates expression (4) below to calculate $W_{j1,j2}$ (step S303).

$$W_{j1,j2} = \sum_{k=1}^{K} U_{j1,k} V_{k,j2} \qquad \cdots (4)$$

When there is an error value, the information processing apparatus 10 adds the error value to $W_{j1,j2}$ (step S304). In steps S303 and S304, the coupling coefficient W is calculated at corresponding positions. Here, an error $e_{ij}$ is a $W_{ij} - (UV)_{ij}$ and stored in the memory as $(i, j, e_{ij})$ or the like together with the positional information of the element. In so doing, not all the errors are stored, but, for example, several errors are selected in descending order. Steps S301 to S304 correspond to step S104 of the minimum solution searching process illustrated in FIG. 6.

After setting $x_0 = x$, the information processing apparatus 10 randomly inverts the bits of x (step S305). Here, the current state x is stored as $x_0$, and the bits of x are flipped.

Next, the information processing apparatus 10 calculates expression (5) below to calculate E(x) (step S306). The energy $E_{j1j2}$ in the energy calculation unit 204 is calculated. The calculation in step S306 may be collectively performed for some sets of $j_1, j_2$. Steps S305 and S306 correspond to step S105 of the minimum solution searching process illustrated in FIG. 6.

$$E(x) = \sum_{j_1,j_2,i=1}^{C} W_{j_1,j_2} x_{i,j_1} x_{(i+1),j_2} \qquad \cdots (5)$$

Next, the information processing apparatus 10 adds together the entire energy of the energy calculation unit 204 to be stored in the memory 505 to obtain Ecand(x) (step S307). Step S307 corresponds to step S106 of the minimum solution searching process illustrated in FIG. 6.

Next, the information processing apparatus 10 uses E(x), Ecand(x), and the temperature T to determine whether to accept or reject based on the Metropolis criterion (step S308). In the acceptance determination, a minimum value Emin(x) of E(x) and its xmin are stored. Step S308 corresponds to step S107 of the minimum solution searching process illustrated in FIG. 6.

Next, when accepted, the information processing apparatus 10 performs updating so as to set E = Ecand(x) and $x_0$ = x, returns to step S305, and repeats the processing a predetermined number of times (step S309). This loop is repeated a predetermined number of times or until Emin(x) reaches a certain value. Then, Emin(x) and xmin are output, and the minimum solution searching process illustrated in FIG. 10 ends. Step S309 corresponds to steps S108 and S109 of the minimum solution searching process illustrated in FIG. 6.

In the minimum solution searching process described above by using the traveling salesman problem as the example, the calculation is performed by using x as it is instead of using the difference. However, the calculation may also be similarly performed with the difference $\Delta x$ of x. When the error for each element of the matrix is separately transmitted, the set of (the row number, the column number, and the error value) are transferred to the memory and restored while performing the reference by using the coupling coefficient W restoration unit 211. Regarding the errors, the errors are only added to the elements of W' = U*V restored by using U and V. Thus, the restoration may be easily performed.

The matrix decomposition technique is not limited to the singular value decomposition and may be any decomposition technique as long as decomposition is successfully performed. For example, nonnegative matrix factorization in which a matrix after decomposition is limited to nonnegative values or 01 matrix factorization in which a matrix after decomposition is limited to be binary. The selection of the matrix decomposition technique depends on how the coupling coefficient W of the problem to be solved is desired to be handled.

The example of the minimum solution searching process described above indicates the case where the coupling coefficient W is of the second degree. However, even in the case where the coupling coefficient W is of the third- or higher-degree, similar processing may be performed by using, for example, tensor decomposition or the like. One of examples of tensor decomposition is Tucker decomposition. This decomposes the three-dimensional array Z into A, B, C, D. Z is an array of N*N*N, each of A, B, and C is an array of N*k, D is an array of k*k*k, and $Z_{abc} = \Sigma_i \Sigma_j \Sigma_k D_{ijk} A_{ia} B_{ib} C_{ic}$. This may also be calculated by the product-sum operation, and compression may be performed by similar calculation as in the case where the coupling coefficient W is of the second degree.

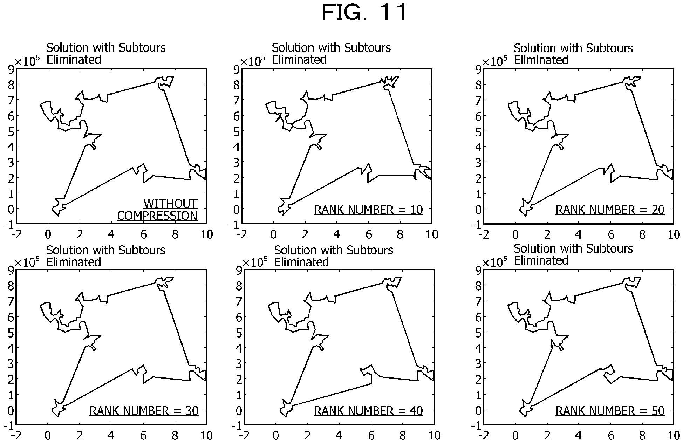

The minimum solution searching process according to the present embodiment has been described by using the traveling salesman problem. Examples of the results of the process is described. FIG. 11 illustrates the examples of the results of the minimum solution searching process according to the present embodiment. FIG. 11 illustrates visiting routes for cities to visit as results of execution of the minimum solution searching process according to the present embodiment made by compressing benchmark data (150 cities) of the traveling salesman problem by using a predetermined rank number k.

The processing results illustrated in FIG. 11 are results of processing the rank number = 0 (without compression) to 50 in increments of 10 from the upper left. The processing result without compression at the upper left is a result obtained by processing the coupling coefficient W as it is, and this is correct answer data. When the processing result without compression and the processing result with the rank number = 10 are compared, it may be understood that, although the general shapes of the visiting routes coincide with each other, there are differences in detailed parts. In contrast, it may be understood that, with the processing result with the rank number = 40 or 50, the differences from the processing result without compression almost disappear. The extent to which the differences are allowed is determined by setting an allowable error by the user depending on data to be handled, and the minimum rank number k within the allowable error is searched.

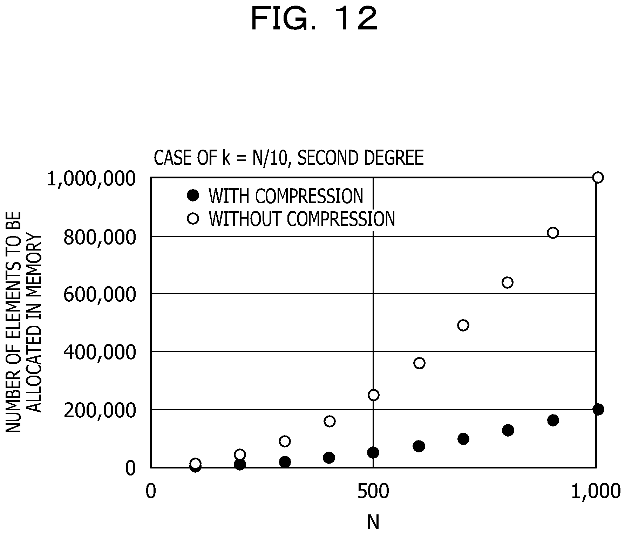

With reference to FIG. 12, an example of the difference in memory allocation amount depending on whether the compression is performed according to the present embodiment. FIG. 12 illustrates the example of the difference in memory allocation amount depending on whether the compression is performed according to the present embodiment. When the coupling coefficient W is not compressed, in the case where the coupling coefficient W of the number of bits N is the second degree, $N^2$ coefficients are to be allocated in the memory, and in the case where the coupling coefficient W is the Dth degree, $N^D$ coefficients are to be allocated in the memory. According to the present embodiment, when the rank number is k, the number of the coefficients may be decreased to $(2N + 1)k$ in the case of the second degree and $(k^3 + 3kN)$ in the case of the third degree. The compression ratio is $(2N + 1)k/N^2$ to $2k/N$ in the case of the second degree and $(k^3 +$

3kN)/N$^3$) in the case of the third degree.

A graph illustrated in FIG. 12 indicates the relationship between N and the number of elements to be allocated in the memory when the coupling coefficient W is the second degree and k = N/10. The graph illustrated in FIG. 12 is an example in which the case where the compression according to the present embodiment is performed on the coupling coefficient W is compared with the case where the compression is not performed. Referring to FIG. 12, it may be understood that, even when N is increased, the number of elements to be allocated in the memory is suppressed to be smaller in the case with the compression than in the case without the compression.

[Effects]

As described above, the information processing apparatus 10 decomposes the matrix of the coupling coefficient representing interaction between a plurality of variables into a plurality of matrices by using the rank number, obtains, from the plurality of matrices, a second element corresponding to a first element of the coupling coefficient, and restores the first element based on the second element.

In solving a discrete optimization problem, the information processing apparatus 10 allocates in the memory only the compressed elements instead of allocating in the memory the matrix including all the coupling coefficients. Accordingly, the size of data to be allocated in the memory may be suppressed.

A process of decomposing into the plurality of matrices executed by the information processing apparatus 10 includes a process of decomposing the coupling coefficient into the plurality of matrices for each rank number by using the plurality of rank numbers. The information processing apparatus 10 further calculates an error between the matrix restored based on the plurality of matrices and the matrix of the coupling coefficient and determines a first rank number that is an allowable error from the plurality of rank numbers based on the error. The process of obtaining the second element executed by the information processing apparatus 10 includes a process of obtaining the second element from a plurality of matrices decomposed by using the first rank number.

Accordingly, the information processing apparatus 10 may suppress the size of data to be allocated in the memory while suppressing, to an allowable range, the distortion generated when the coupling coefficient is decomposed and restored.

The process of decomposing into the plurality of matrices executed by the information processing apparatus 10 includes a process of decomposing the matrix of the coupling coefficient which is a second-degree matrix into the plurality of matrices by using at least one of singular value decomposition, nonnegative matrix factorization, and 0/1 matrix decomposition.

Accordingly, the information processing apparatus 10 may select and use a more appropriate matrix decomposition technique depending on how the coupling coefficient W of the problem desired to be solved is desired to be handled.

The process of decomposing into the plurality of matrices executed by the information processing apparatus 10 includes a process of decomposing the matrix of the coupling coefficient which is a third- or higher-degree matrix into the plurality of matrices by using tensor decomposition.

Accordingly, the information processing apparatus 10 may suppress the size of data to be allocated in the memory not only in the case where the coupling coefficient is of the second degree but also in the case where the coupling coefficient is of a third or higher degree.

The process of obtaining the second element executed by the information processing apparatus 10 includes a process of obtaining the second element corresponding to the first element in a region of an upper triangular matrix or a lower triangular matrix of the matrix of the coupling coefficient which is a symmetric matrix. The process of restoring the first element includes a process of restoring first elements in regions of the upper triangular matrix and the lower triangular matrix based on the second element.

Thus, the information processing apparatus 10 may further suppress the size of data to be allocated in the memory.

[System]

Unless otherwise specified, processing procedures, control procedures, specific names, and information including various types of data and parameters described in the above-described document or drawings may be arbitrarily changed. The specific examples, distributions, numerical values, and so forth described in the examples are merely exemplary and may be arbitrarily changed.

Each element of each illustrated apparatus is of a functional concept and is not necessarily physically configured as illustrated in the drawings. For example, the specific form of distribution or integration of each apparatus is not limited to that illustrated in the drawings. For example, the entirety or part of the apparatus may be configured so as to be functionally or physically distributed or integrated in any units in accordance with various types of loads, usage states, or the like. All or any part of the processing functions performed by each apparatus may be realized by a CPU and a program analyzed and executed by the CPU or may be realized by hardware using wired logic.

[Hardware]

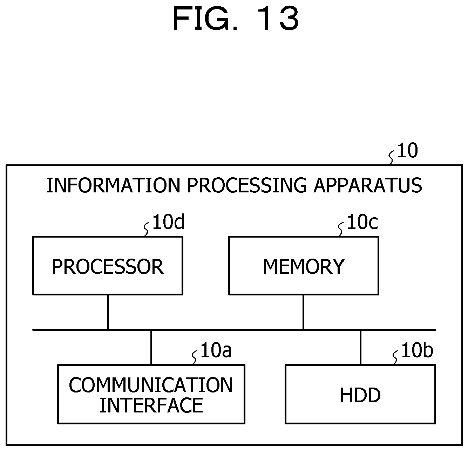

FIG. 13 explains a hardware configuration example. As illustrated in FIG. 13, the information processing apparatus 10 includes a communication interface 10a, an HDD 10b, a memory 10c, and a processor 10d. The components illustrated in FIG. 13 are coupled to each other by a bus or the like.

The communication interface 10a is a network interface card or the like and performs communication with other servers. The HDD 10b stores a database (DB) and a program for operating the functions illustrated in FIG. 3.

The processor 10d is a hardware circuit that reads, from the HDD 10b or the like, the program for executing processes similar to those of the processing units illustrated in FIG. 3 and loads the program to the memory 10c to operate processes of executing the functions illustrated in FIG. 3 or the like. For example, these processes execute the functions similar to the functions of the processing units included in the information processing apparatus 10.

The information processing apparatus 10 operates as an information processing apparatus that executes an operation control process by reading and executing the program for executing the processes similar to those of the processing units illustrated in FIG. 3. The information processing apparatus 10 may also realize functions similar to the functions of the above-described examples by reading the program from a recording medium with a medium reading device and executing the read program. Execution of this program is not limited to the execution by using the information processing apparatus 10. For example, the present embodiment may be similarly applied when another computer or a server executes the program or the other computer and the server cooperate with each other to execute the program.

The program for executing the processes similar to those of the processing units illustrated in FIG. 3 may be distributed through a network such as the Internet. The program may be recorded on a computer-readable recording medium such as a hard disk, a flexible disk (FD), a compact disc read-only memory (CD-ROM), a magneto-optical disk (MO), or a Digital Versatile Disc (DVD) and may be executed by being read from the recording medium by the computer.

**Claims**

1. An information processing apparatus comprising:
   a control unit that

   decomposes a first matrix of a coupling coefficient which represents interaction between a plurality of variables into a plurality of matrices by using a plurality of rank numbers, for each of the plurality of rank numbers,
   obtains, from the plurality of matrices, a second element that corresponds to a first element of the coupling coefficient,
   restores the first element based on the second element,
   restores a second matrix based on the plurality of matrices,
   acquires a squared error between the second matrix and the first matrix,
   determines a first rank number which is an allowable error from the plurality of rank numbers based on the error, and
   obtains the second element from the plurality of matrices decomposed by using the first rank number.

2. The information processing apparatus according to claim 1, wherein the control unit that further decomposes the first matrix which is a second-degree matrix into the plurality of matrices by using at least one selected from singular value decomposition, nonnegative matrix factorization, and 0/1 matrix decomposition.

3. The information processing apparatus according to claim 1, wherein the control unit that further decomposes the first matrix which is a third-degree or higher-degree matrix into the plurality of matrices by using tensor decomposition.

4. The information processing apparatus according to claim 1, wherein the control unit that further

   obtains the second element which corresponds to the first element in a region of a triangular matrix selected from an upper triangular matrix of the first matrix and a lower triangular matrix of the first matrix which is a symmetric matrix, and
   restores first elements in regions of the upper triangular matrix and the lower triangular matrix based on the second element.

5. An information processing method for a computer to execute a process comprising:

   decomposing a first matrix of a coupling coefficient which represents interaction between a plurality of variables into a plurality of matrices by using a plurality of rank numbers, for each of the plurality of rank numbers;
   obtaining, from the plurality of matrices, a second element that corresponds to a first element of the coupling coefficient;
   restoring the first element based on the second element;
   restoring a second matrix based on the plurality of matrices;
   acquiring a squared error between the second matrix and the first matrix;
   determining a first rank number which is an allowable error from the plurality of rank numbers based on the error; and
   obtaining the second element from the plurality of matrices decomposed by using the first rank number.

6. The information processing method according to claim 5, wherein
   the decomposing includes decomposing the first matrix which is a second-degree matrix into the plurality of matrices by using at least one selected from singular value decomposition, nonnegative matrix factorization, and 0/1 matrix decomposition.

7. The information processing method according to claim 5, wherein
   the decomposing includes decomposing the first matrix which is a third-degree or higher-degree matrix into the plurality of matrices by using tensor decomposition.

8. The information processing method according to claim 5, wherein

   the obtaining includes obtaining the second element which corresponds to the first element in a region of a triangular matrix selected from an upper triangular matrix of the first matrix and a lower triangular matrix of the first matrix which is a symmetric matrix, and
   the restoring includes restoring first elements in regions of the upper triangular matrix and the lower triangular matrix based on the second element.

9. An information processing program that causes at least one computer to execute a process, the process comprising:

   decomposing a first matrix of a coupling coefficient which represents interaction between a plurality of variables into a plurality of matrices by using a plurality of rank numbers, for each of the plurality of tank numbers;
   obtaining, from the plurality of matrices, a second element that corresponds to a first element of the coupling coefficient;
   restoring the first element based on the second element;
   restoring a second matrix based on the plurality of matrices;
   acquiring a squared error between the second matrix and the first matrix;
   determining a first rank number which is an allowable error from the plurality of rank numbers based on the error; and
   obtaining the second element from the plurality of matrices decomposed by using the first rank number.

10. The information processing program according to claim 9, wherein
    the decomposing includes decomposing the first matrix which is a second-degree matrix into the plurality of matrices by using at least one selected from singular value decomposition, nonnegative matrix factorization, and 0/1 matrix decomposition.

11. The information processing program according to claim 9, wherein
    the decomposing includes decomposing the first matrix which is a third-degree or higher-degree matrix into the plurality of matrices by using tensor decomposition.

12. The information processing program according to claim 9, wherein

    the obtaining includes obtaining the second element which corresponds to the first element in a region of a triangular matrix selected from an upper triangular matrix of the first matrix and a lower triangular matrix of the first matrix which is a symmetric matrix, and
    the restoring includes restoring first elements in regions of the upper triangular matrix and the lower triangular matrix based on the second element.

**Patentansprüche**

1.  Informationsverarbeitungseinrichtung, umfassend: eine Steuereinheit, die

    eine erste Matrix eines Kopplungskoeffizienten, der eine Wechselwirkung zwischen einer Vielzahl von Variablen darstellt, unter Verwendung einer Vielzahl von Rangzahlen in eine Vielzahl von Matrizen zerlegt, für jede der Vielzahl von Rangzahlen,
    aus der Vielzahl von Matrizen ein zweites Element erhält, das einem ersten Element des Kopplungskoeffizienten entspricht,
    das erste Element auf der Grundlage des zweiten Elements wiederherstellt,
    eine zweite Matrix auf der Grundlage der Vielzahl von Matrizen wiederherstellt,
    einen quadratischen Fehler zwischen der zweiten Matrix und der ersten Matrix erfasst,
    eine erste Rangnummer, die ein zulässiger Fehler ist, aus der Vielzahl von Rangnummern auf der Grundlage des Fehlers bestimmt, und
    das zweite Element aus der Vielzahl von Matrizen erhält, die unter Verwendung der ersten Rangnummer zerlegt werden.

2.  Informationsverarbeitungseinrichtung nach Anspruch 1, wobei die Steuereinheit, die weiter die erste Matrix, die eine Matrix zweiten Grades ist, in die Vielzahl von Matrizen zerlegt, indem sie mindestens eines ausgewählt aus Singulärwertzerlegung, nicht-negativer Matrixfaktorisierung und 0/1-Matrixzerlegung verwendet.

3.  Informationsverarbeitungseinrichtung nach Anspruch 1, wobei die Steuereinheit, die weiter die erste Matrix, bei der es sich um eine Matrix dritten Grades oder höheren Grades handelt, unter Verwendung von Tensorzerlegung in die Vielzahl von Matrizen zerlegt.

4.  Informationsverarbeitungseinrichtung nach Anspruch 1, wobei die Steuereinheit, die weiter

    das zweite Element erhält, das dem ersten Element in einem Bereich einer Dreiecksmatrix entspricht, die aus einer oberen Dreiecksmatrix der ersten Matrix und einer unteren Dreiecksmatrix der ersten Matrix ausgewählt ist, die eine symmetrische Matrix ist, und
    erste Elemente in Bereichen der oberen Dreiecksmatrix und der unteren Dreiecksmatrix auf der Grundlage des zweiten Elements wiederherstellt.

5.  Informationsverarbeitungsverfahren für einen Computer zum Ausführen eines Prozesses, umfassend:

    Zerlegen einer ersten Matrix eines Kopplungskoeffizienten, der eine Wechselwirkung zwischen einer Vielzahl von Variablen darstellt, in eine Vielzahl von Matrizen unter Verwendung einer Vielzahl von Rangzahlen für jede der Vielzahl von Rangzahlen;
    Erhalten eines zweiten Elements aus der Vielzahl von Matrizen, das einem ersten Element des Kopplungskoeffizienten entspricht;
    Wiederherstellen des ersten Elements auf der Grundlage des zweiten Elements;
    Wiederherstellen einer zweiten Matrix auf der Grundlage der Vielzahl von Matrizen;
    Erfassen eines quadratischen Fehlers zwischen der zweiten Matrix und der ersten Matrix;
    Bestimmen einer ersten Rangzahl, die ein zulässiger Fehler ist, aus der Vielzahl von Rangzahlen auf der Grundlage des Fehlers; und
    Erhalten des zweiten Elements aus der Vielzahl von Matrizen, die unter Verwendung der ersten Rangzahl zerlegt wurden.

6.  Informationsverarbeitungsverfahren nach Anspruch 5, wobei
    das Zerlegen das Zerlegen der ersten Matrix, die eine Matrix zweiten Grades ist, in die Vielzahl von Matrizen unter Verwendung mindestens eines ausgewählt aus Singulärwertzerlegung, nicht-negativer Matrixfaktorisierung und 0/1-Matrixzerlegung einschließt.

7.  Informationsverarbeitungsverfahren nach Anspruch 5, wobei
    das Zerlegen das Zerlegen der ersten Matrix, die eine Matrix dritten Grades oder höheren Grades ist, in die Vielzahl von Matrizen unter Verwendung von Tensorzerlegung einschließt.

8. Informationsverarbeitungsverfahren nach Anspruch 5, wobei

das Erhalten das Erhalten des zweiten Elements einschließt, das dem ersten Element in einem Bereich einer Dreiecksmatrix entspricht, die aus einer oberen Dreiecksmatrix der ersten Matrix und einer unteren Dreiecksmatrix der ersten Matrix, die eine symmetrische Matrix ist, ausgewählt wird, und
das Wiederherstellen das Wiederherstellen erster Elemente in Bereichen der oberen Dreiecksmatrix und der unteren Dreiecksmatrix auf der Grundlage des zweiten Elements einschließt.

9. Informationsverarbeitungsprogramm, das mindestens einen Computer veranlasst, einen Prozess auszuführen, wobei der Prozess umfasst:

Zerlegen einer ersten Matrix eines Kopplungskoeffizienten, der eine Wechselwirkung zwischen einer Vielzahl von Variablen darstellt, in eine Vielzahl von Matrizen unter Verwendung einer Vielzahl von Rangzahlen für jede der Vielzahl von Rangzahlen;
Erhalten eines zweiten Elements aus der Vielzahl von Matrizen, das einem ersten Element des Kopplungskoeffizienten entspricht;
Wiederherstellen des ersten Elements auf der Grundlage des zweiten Elements;
Wiederherstellen einer zweiten Matrix auf der Grundlage der Vielzahl von Matrizen;
Erfassen eines quadratischen Fehlers zwischen der zweiten Matrix und der ersten Matrix;
Bestimmen einer ersten Rangzahl, die ein zulässiger Fehler ist, aus der Vielzahl von Rangzahlen auf der Grundlage des Fehlers; und
Erhalten des zweiten Elements aus der Vielzahl von Matrizen, die unter Verwendung der ersten Rangzahl zerlegt wurden.

10. Informationsverarbeitungsprogramm nach Anspruch 9, wobei
das Zerlegen das Zerlegen der ersten Matrix, die eine Matrix zweiten Grades ist, in die Vielzahl von Matrizen unter Verwendung mindestens eines ausgewählt aus Singulärwertzerlegung, nicht-negativer Matrixfaktorisierung und 0/1-Matrixzerlegung einschließt.

11. Informationsverarbeitungsprogramm nach Anspruch 9, wobei
das Zerlegen das Zerlegen der ersten Matrix, die eine Matrix dritten Grades oder höheren Grades ist, in die Vielzahl von Matrizen unter Verwendung von Tensorzerlegung einschließt.

12. Informationsverarbeitungsprogramm nach Anspruch 9, wobei

das Erhalten das Erhalten des zweiten Elements einschließt, das dem ersten Element in einem Bereich einer Dreiecksmatrix entspricht, die aus einer oberen Dreiecksmatrix der ersten Matrix und einer unteren Dreiecksmatrix der ersten Matrix, die eine symmetrische Matrix ist, ausgewählt wird, und
das Wiederherstellen das Wiederherstellen erster Elemente in Bereichen der oberen Dreiecksmatrix und der unteren Dreiecksmatrix auf der Grundlage des zweiten Elements einschließt.

**Revendications**

1. Appareil de traitement d'informations comprenant : une unité de commande qui

décompose une première matrice d'un coefficient de couplage qui représente l'interaction entre une pluralité de variables en une pluralité de matrices en utilisant une pluralité de numéros de rang, pour chacun de la pluralité de numéros de rang,
obtient, à partir de la pluralité de matrices, un deuxième élément qui correspond à un premier élément du coefficient de couplage,
restaure le premier élément sur la base du deuxième élément,
restaure une deuxième matrice sur la base de la pluralité de matrices,
acquiert une erreur au carré entre la deuxième matrice et la première matrice, détermine un premier numéro de rang qui est une erreur admissible à partir de la pluralité de numéros de rang sur la base de l'erreur, et
obtient le deuxième élément à partir de la pluralité de matrices décomposées en utilisant le premier numéro de rang.

**2.** Appareil de traitement d'informations selon la revendication 1, dans lequel l'unité de commande décompose en outre la première matrice qui est une matrice de deuxième degré en la pluralité de matrices en utilisant au moins l'une sélectionnée parmi une décomposition en valeurs singulières, une factorisation matricielle non négative et une décomposition matricielle 0/1.

**3.** Appareil de traitement d'informations selon la revendication 1, dans lequel l'unité de commande décompose en outre la première matrice qui est une matrice de troisième degré ou de degré supérieur en la pluralité de matrices en utilisant une décomposition tensorielle.

**4.** Appareil de traitement d'informations selon la revendication 1, dans lequel l'unité de commande obtient

en outre le deuxième élément qui correspond au premier élément dans une région d'une matrice triangulaire sélectionnée parmi une matrice triangulaire supérieure de la première matrice et une matrice triangulaire inférieure de la première matrice qui est une matrice symétrique, et
restaure de premiers éléments dans des régions de la matrice triangulaire supérieure et de la matrice triangulaire inférieure sur la base du deuxième élément.

**5.** Procédé de traitement d'informations pour amener un ordinateur à exécuter un processus comprenant :

la décomposition d'une première matrice d'un coefficient de couplage qui représente l'interaction entre une pluralité de variables en une pluralité de matrices en utilisant une pluralité de numéros de rang, pour chacun de la pluralité de numéros de rang ;
l'obtention, à partir de la pluralité de matrices, d'un deuxième élément qui correspond à un premier élément du coefficient de couplage ;
la restauration du premier élément sur la base du deuxième élément ;
la restauration d'une deuxième matrice sur la base de la pluralité de matrices ;
l'acquisition d'une erreur au carré entre la deuxième matrice et la première matrice ;
la détermination d'un premier numéro de rang qui est une erreur admissible à partir de la pluralité de numéros de rang sur la base de l'erreur ; et
l'obtention du deuxième élément à partir de la pluralité de matrices décomposées en utilisant le premier numéro de rang.

**6.** Procédé de traitement d'informations selon la revendication 5, dans lequel
la décomposition comporte la décomposition de la première matrice qui est une matrice de deuxième degré en la pluralité de matrices en utilisant au moins l'une sélectionnée parmi une décomposition en valeurs singulières, une factorisation matricielle non négative et une décomposition matricielle 0/1.

**7.** Procédé de traitement d'informations selon la revendication 5, dans lequel
la décomposition comporte la décomposition de la première matrice qui est une matrice de troisième degré ou de degré supérieur en la pluralité de matrices en utilisant une décomposition tensorielle.

**8.** Procédé de traitement d'informations selon la revendication 5, dans lequel

l'obtention comporte l'obtention du deuxième élément qui correspond au premier élément dans une région d'une matrice triangulaire sélectionnée parmi une matrice triangulaire supérieure de la première matrice et une matrice triangulaire inférieure de la première matrice qui est une matrice symétrique, et
la restauration comporte la restauration de premiers éléments dans des régions de la matrice triangulaire supérieure et de la matrice triangulaire inférieure sur la base du deuxième élément.

**9.** Programme de traitement d'informations qui amène au moins un ordinateur à exécuter un processus, le processus comprenant :

la décomposition d'une première matrice d'un coefficient de couplage qui représente l'interaction entre une pluralité de variables en une pluralité de matrices en utilisant une pluralité de numéros de rang, pour chacun de la pluralité de numéros de rang ;
l'obtention, à partir de la pluralité de matrices, d'un deuxième élément qui correspond à un premier élément du coefficient de couplage ;

la restauration du premier élément sur la base du deuxième élément ;

la restauration d'une deuxième matrice sur la base de la pluralité de matrices ;

l'acquisition d'une erreur au carré entre la deuxième matrice et la première matrice ;

la détermination d'un premier numéro de rang qui est une erreur admissible à partir de la pluralité de numéros de rang sur la base de l'erreur ; et

l'obtention du deuxième élément à partir de la pluralité de matrices décomposées en utilisant le premier numéro de rang.

**10.** Programme de traitement d'informations selon la revendication 9, dans lequel
la décomposition comporte la décomposition de la première matrice qui est une matrice de deuxième degré en la pluralité de matrices en utilisant au moins l'une sélectionnée parmi une décomposition en valeurs singulières, une factorisation matricielle non négative et une décomposition matricielle 0/1.

**11.** Programme de traitement d'informations selon la revendication 9, dans lequel
la décomposition comporte la décomposition de la première matrice qui est une matrice de troisième degré ou de degré supérieur en la pluralité de matrices en utilisant une décomposition tensorielle.

**12.** Programme de traitement d'informations selon la revendication 9, dans lequel

l'obtention comporte l'obtention du deuxième élément qui correspond au premier élément dans une région d'une matrice triangulaire sélectionnée parmi une matrice triangulaire supérieure de la première matrice et une matrice triangulaire inférieure de la première matrice qui est une matrice symétrique, et

la restauration comporte la restauration de premiers éléments dans des régions de la matrice triangulaire supérieure et de la matrice triangulaire inférieure sur la base du deuxième élément.

# FIG. 1

APPLICATION UNIT
101

MINIMUM SOLUTION
SEARCHING UNIT
102

COUPLING
COEFFICIENT W

103

W

MEMORY

x

107

FLIP BITS OF x

104

E CALCULATION UNIT

...

E CALCULATION UNIT

105

TEMPERATURE T

106

ACCEPTANCE
DETERMINATION

E,x

# FIG. 2

USER

004
GENERAL-
PURPOSE CPU

001
UI

005
W

MEMORY (HDD/RAM)

PARAMETER

002
MINIMUM SOLUTION
SEARCHING UNIT

003

DEDICATED HARDWARE
FPGA
GPU
GENERAL-PURPOSE CPU

W

COUPLING
COEFFICIENT W

MEMORY
(SRAM/DRAM)

FIG. 3

# FIG. 4

# FIG. 5

MEMORY (HDD/RAM) 505

W

GENERAL-PURPOSE CPU 504

USER

UI 501

PARAMETER

COUPLING COEFFICIENT W

MINIMUM SOLUTION SEARCHING UNIT 502

DEDICATED HARDWARE
FPGA
GPU
GENERAL-PURPOSE CPU

503

U

V

MEMORY (SRAM/DRAM)

# FIG. 6

```
                    ┌──────────────┐
                    │    START     │
                    └──────────────┘
                            │
                            ▼                        ⌐S101
┌───────────────────────────────────────────────────────────┐
│     BY USING COUPLING COEFFICIENT W, PERFORM MATRIX         │
│  DECOMPOSITION WITH RESPECT TO U AND V OF A PLURALITY OF     │
│               RANK NUMBERS IN 208                           │
│       USE SVD AS EXAMPLE OF MATRIX DECOMPOSITION            │
│    ACCUMULATE RESULTS OF MATRIX DECOMPOSITION IN 210        │
└───────────────────────────────────────────────────────────┘
                            │
                            ▼                        ⌐S102
┌───────────────────────────────────────────────────────────┐
│   IN 209, DETERMINE RANK NUMBER WHICH IS ALLOWABLE ERROR FROM│
│  RELATIONSHIP BETWEEN PLURALITY OF RANK NUMBERS AND ERROR    │
└───────────────────────────────────────────────────────────┘
                            │
                            ▼                        ⌐S103
┌───────────────────────────────────────────────────────────┐
│ TRANSMIT TO MEMORY OF 203 U AND V OF RANK NUMBER DESIGNATED BY│
│     210 BY FOLLOWING RANK NUMBER DETERMINED IN S102          │
└───────────────────────────────────────────────────────────┘
                            │
                            ▼                        ⌐S104
┌───────────────────────────────────────────────────────────┐
│ RESTORE ELEMENTS OF W BY READING ELEMENTS OF U AND V ONLY    │
│ AT POSITIONS CORRESPONDING TO ELEMENTS OF W TO BE HANDLED    │
│               BY E CALCULATION UNIT 204                      │
└───────────────────────────────────────────────────────────┘
                            │
                            ▼                        ⌐S105
┌───────────────────────────────────────────────────────────┐
│ CALCULATE ENERGY OF CORRESPONDING POSITIONS FROM $W_{ij}$ AND │
│               BITS xi, xj WITH 204                          │
└───────────────────────────────────────────────────────────┘
                            │
                            ▼                        ⌐S106
┌───────────────────────────────────────────────────────────┐
│            ADD TOGETHER RESULTS OF 204 IN 205               │
└───────────────────────────────────────────────────────────┘
                            │
                            ▼                        ⌐S107
┌───────────────────────────────────────────────────────────┐
│          PERFORM ACCEPTANCE DETERMINATION IN 206            │
└───────────────────────────────────────────────────────────┘
                            │
                            ▼                        ⌐S108
┌───────────────────────────────────────────────────────────┐
│  WHEN ACCEPTED, OVERWRITE CANDIDATE x STATE AND ENERGY       │
│           FLIP PLURAL BITS OF x FROM 1 IN 207               │
└───────────────────────────────────────────────────────────┘
                            │
                            ▼                        ⌐S109
┌───────────────────────────────────────────────────────────┐
│ CAUSE S104 TO S108 TO BE LOOPED UNTIL PREDETERMINED NUMBER  │
│            OF TIMES OR ENERGY IS REACHED                    │
└───────────────────────────────────────────────────────────┘
                            │
                            ▼
                    ┌──────────────┐
                    │     END      │
                    └──────────────┘
```

# FIG. 7

START POINT CITY $j_1$

|  | 1 | 2 | 3 | ⋯ | c |
|---|---|---|---|---|---|
| 1 | 0 | 60 | 32 | ⋯ | 88 |
| 2 | 60 | 0 | 99 | ⋯ | 77 |
| 3 | 32 | 99 | 0 | ⋯ | 66 |
| ⋯ | ⋯ | ⋯ | ⋯ | 0 | ⋯ |
| c | 88 | 77 | 66 | ⋯ | 0 |

ARRIVAL POINT CITY $j_2$

# FIG. 8

CITY j

|  | 1 | 2 | 3 | ... | c |
|---|---|---|---|---|---|
| 1 | 0 | 1 | 0 | 0 | 0 |
| 2 | 0 | 0 | 0 | 0 | 1 |
| 3 | 1 | 0 | 0 | 0 | 0 |
| ... | ... | ... | ... | ... | ... |
| c | 0 | 0 | 1 | 0 | 0 |

VISITING ROUTE i

# FIG. 9

START

S201
OBTAIN COUPLING COEFFICIENT W AND
ALLOWABLE ERROR eTH

S202
SET k = 1

S203
PERFORMS SVD WITH RANK NUMBER k TO OBTAIN
DECOMPOSITION RESULTS Uk, Sk, Vk

S204
CALCULATE $Dk = sqrt(\Sigma(W - UkSkVk)^2/c^2)$

S205
Dk < eTH ?

NO

YES

S206
SET k = k + 1

S207
OUTPUT Uk, Sk, Vk AND TRANSFER Uk, Sk, Vk TO
MEMORY OF 203

END

# FIG. 10

START

S301

OBTAIN X AND POSITIONS j1, j2 OF W HANDLED BY E CALCULATION
UNIT, U, V, RANK NUMBER k, AND TEMPERATURE T
INPUT INITIAL VALUE FOR x
SET $x_0 = x$
INITIAL VALUE E(x) OF ENERGY IS SET TO MAXIMUM VALUE

S302

PERFORM CALCULATION OF $W_{j1,j2}$
EXCHANGE $j_2$ AND $j_1$ WHEN $j_2 > j_1$

S303

CALCULATE

$$W_{j_1 j_2} = \sum_{k=1}^{K} U_{j1,k} V_{k,j2}$$

S304

WHEN THERE IS ERROR VALUE, ADD ERROR VALUE TO $W_{j1j2}$

S305

AFTER SETTING $x_0 = x$, RANDOMLY INVERT BITS OF x

S306

CALCULATE

$$E(x) = \sum_{j_1, j_2, i=1}^{C} W_{j_1 j_2} x_{i, j_1} x_{(i+1), j_2}$$

S307

ADD TOGETHER ENTIRE ENERGY OF 505 TO OBTAIN Ecand(x)

S308

USE E(x), Ecand(x), AND T TO DETERMINE WHETHER TO ACCEPT OR
REJECT BASED ON METROPOLIS CRITERION

S309

WHEN ACCEPTED, SET E(x) = Ecand(x), $x_0 = x$, AND RETURN TO S305
REPEAT PREDETERMINED NUMBER OF TIMES

END

# FIG. 11

Solution with Subtours Eliminated — WITHOUT COMPRESSION

Solution with Subtours Eliminated — RANK NUMBER = 10

Solution with Subtours Eliminated — RANK NUMBER = 20

Solution with Subtours Eliminated — RANK NUMBER = 30

Solution with Subtours Eliminated — RANK NUMBER = 40

Solution with Subtours Eliminated — RANK NUMBER = 50

# FIG. 12

CASE OF k = N/10, SECOND DEGREE

Plot with x-axis labeled "N" (0, 500, 1,000) and y-axis labeled "NUMBER OF ELEMENTS TO BE ALLOCATED IN MEMORY" (0, 200,000, 400,000, 600,000, 800,000, 1,000,000).

Legend:
● WITH COMPRESSION
○ WITHOUT COMPRESSION

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019185602 A
- US 20190318258
- JP 2018206016 A

### Non-patent literature cited in the description

- **CICHOCKI A et al.** Tensor Networks for Dimensionality Reduction and Large-Scale Optimizations. Part 2 Applications and Future Perspectives. CORNELL UNIVERSITY LIBRARY, 30 August 2017
- **CICHOCKI ANDRZEJ et al.** Tensor Networks for Dimensionality Reduction and Large-scale Optimization: Part 1 Low-Rank Tensor Decompositions. *FOUNDATIONS AND TRENDS IN MACHINE LEARNING*, 01 January 2017, vol. 9 (4-5), 249-429
- **JI YUWANG et al.** A Survey on Tensor Techniques and Applications in Machine Learning. *IEEE ACCESS*, 19 November 2019, vol. 7, 16950-162990